# EUROPEAN PATENT APPLICATION

(11) **EP 3 528 227 A1**
(43) Date of publication of application: **21.08.2019**
(21) Application number: 17768658.1
(22) Date of filing: 16.08.2017
(51) Int. Cl.: G08G 1/01

(54) **TRAFFIC AUDIOVISUAL RECEIVING AND ANALYZING SYSTEM**

(30) Priority: 12.10.2016 CN 201610888936
(71) Applicant: Amko Solara Lighting Co., Ltd., Taipei City 104 (TW)
(72) Inventor: NG, Michael, Taipei City 104 (TW)
(74) Representative: Horak, Michael
(86) International application number: PCT/CN2017/097655
(87) International publication number: WO 2018/068579

(57) **Abstract**

A system for receiving and analyzing a traffic video is made of a plurality of supervisory equipment 11, and the supervisory equipment 11 respectively includes a control unit 111, a camera unit 112, a storage unit 113 and an analysis unit 114. The camera unit 112 is electrically connected to the control unit 111 to capture images. The storage unit 113 is electrically connected to the control unit 111 and the camera unit 112 to receive and store a displaying image through the function of capturing images from the camera unit 112. The analysis unit 114 is electrically connected to the control unit 111 and the storage unit 113 to read the displaying images stored in the storage unit 113, and the displaying images is analyzed based on at least one pre-setting analysis condition. Therefore, the displaying images may be analyzed through the analyzing unit to realize situations of traffic events, such as forecast before traffic events, judgment during traffic events or record after traffic events.

## Description

### (a) Technical Field of the Invention

The present invention relates to a system for receiving and analyzing a traffic video, and more particularly to a system for executing a function of capturing images, video, depth data, sound field, magnetic field, EMI field, light field via depth perception detectors such as infrared, sonar, and lidar (Laser Radar), magnetic and EMI field detectors, and cameras that capture light field data.

### (b) Description of the Prior Art

With the gradual development of industrial society, requirements and dependence for transportation are increasing. People have a high dependency on transportation in modem society; therefore, it is an important part that the traffic safety cannot be ignored in our life. The common dangerous driving includes a variety of driving behaviors as described below, for example, failing to stay within the speed limit, including speeding and low speed limit, arbitrary change lanes, vehicle across the double white line, failing to keep safe distance with front-vehicle and so on. These driving behaviors will not only endanger driver's safety and the safety of others, but also cause heavy casualties of the car accident. Therefore, in addition to comply with traffic regulations, drivers should always pay attention to the status of the road to avoid the occurrence of traffic accidents.

In order to effectively handle the traffic situation and fully understand the causes of the incidents to clarify the attribution of responsibility after the accident. Therefore, traffic situation analysis and notification system are shown as displaying images which are captured by an imaging equipment in the accident, and the displaying images are analyzed to recreate accident scene and to understand the cause of the accident.

The image recognition technology has been widely used in the traffic situation analysis and notification system. Currently, most applications of the equipment are that the image data stored in a single imaging equipment are performed in a step of image identification, such as vehicle license plate recognition, traffic flow detection, face detection/ recognition, displacement detection, people tracking, directional movement detection, electrified fences, object leaving, imaging equipment cover, face detection and so on. After completing identification, information of the image characteristics, such as plate number, vehicle color, vehicle type, vehicle brand model, size and number of motorcycle, object position, object size, directionality and so on, are stored and shown; however, the results of identification with different characteristics are not comprehensively analyzed and utilized, leading to the large numbers of waste on operation resources.

Additionally, in the known traffic condition analysis and notification system, the basic imaging equipment are only disposed on the road, and the imaging equipment are connected to a remote server through an internet. All analysis operational data must be sent to the remote server when the identifications of aforementioned image are operated in the known traffic condition analysis and notification system. However, it is inappropriate for wasting time to transfer information and being not able to make an immediate response on the scene.

From the above description we can learn that the results of identification with different characteristics are not comprehensively analyzed and utilized, and all analysis operational data must be sent to the remote server, which is waste of time to transfer information in the known traffic condition analysis and notification system. Therefore, how to design a system for receiving and analyzing a traffic video to provide the most immediate, firsthand information, and take into account the detailed, precise analysis task and set the overall cost, is an important issue which needs to be solved by the inventor.

### SUMMARY OF THE INVENTION

In view of the shortcomings of the known traffic condition analysis and notification system, the inventor has finally developed and designed a system for receiving and analyzing a traffic video of the invention according to his experience in the related industry, many studies and adjustments. To improve the defects mentioned above, the present invention is proposed.

To achieve the above object, the present invention provides a system for receiving and analyzing a traffic video made of a plurality of supervisory equipment, and each of the supervisory equipment may respectively comprise a control unit, a camera unit, a storage unit and an analysis unit. The camera unit is electrically connected to the control unit to execute a function of capturing images by the control unit. The storage unit is electrically connected to the control unit and the camera unit to receive and store a displaying image through the function of capturing images from the camera unit. The analysis unit is electrically connected to the control unit and the storage unit to read the displaying images stored in the storage unit, and the displaying images are analyzed, based on at least one pre-setting analysis condition. Therefore, the supervisory equipment is capable of analyzing the displaying images through the analyzing unit to clarify the situation of traffic events, such as forecast before traffic events happening, judgment during traffic events or record after traffic events.

Another object of the present invention is that the at least one analysis condition is a motion object recognition condition. A simulated computation is executed by the analysis unit to obtain a simulated moving path equivalent to the motion object, when a motion object is recognized by the analysis unit according to the motion object recognition condition. Therefore, the simulated computation is executed by the analysis unit, so that the possible motion paths can be calculated in advance in the process of motions of various vehicles and even pedestrians, and the simulated computation can be an assessment standard of traffic conditions in advance.

Another object of the present invention is that each of the supervisory equipment further comprises a wireless transmission. The wireless transmission is electrically connected to the control unit, and any supervisory equipment of the system is capable of transmitting information to another supervisory equipment of the system through the wireless transmission unit. Therefore, each of the supervisory equipment may obtain the displaying images captured at different angles, and execute a comprehensive analysis through sharing information to improve the accuracy and credibility of various analyses.

Another object of the present invention is that the analysis unit of each of the supervisory equipment is capable of receiving another displaying image of another supervisory equipment, and a simulated computation is executed according to the displaying image of the supervisory equipment and another displaying image of another supervisory equipment to obtain the simulated moving path equivalent to the motion object. Therefore, the displaying images captured at different angles are executed a comprehensive analysis, so that the predicted resultant of the simulated moving path are more accurately.

Another object of the present invention is that the system further comprises a sound recording unit. The sound recording unit is electrically connected to the control unit and the storage unit to execute a function of recording sound through the control unit, and a recorded sound signal is stored in the storage unit. Therefore, the analysis conditions related to sound singles, other than the displaying images, are increased to enhance the correctness of analysis and judgment during the traffic events.

Another object of the present invention is that at least one analysis condition is an accident characteristic recognition condition. An event recording signal is sent to the control unit when the occurrence of accident is detected by the accident characteristic recognition condition, that the displaying image at a predetermined time range is stored as an event recording image by the control unit according to the event recording signal, and the sound single at a predetermined time range is stored as an event recording sound signal. Therefore, the sound and video before and after the traffic events are stored as the event recording sound signal and the event recording image to clarify the responsibility of the accident after the traffic events.

Another object of the present invention is that the system further comprises a server. The server is connected to the supervisory equipment through a network to receive singles from the supervisory equipment. Therefore, the event recording signal and the event recording image are sent to the server to save the event recording sound signal and the event recording image by the server for a period of time. Furthermore, the analysis operation with higher complexity is executed by a hardware resource built in the server. Additionally, the analysis operation cannot be executed by each the supervisory equipment itself, but the analysis operation is executed by a hardware resource built in the server.

Another object of the present invention is that the system further comprises a flame detector. The flame detector is electrically connected to the control unit to send an alarm signal to the control unit when a fire occurrence is detected by the flame detector, so that a notification signal is sent to the server by the control unit through the network, such as the wireless transmission un. Therefore, the system cannot only be used for forecast, notification and record of the general traffic events, but also further provides the function of fire alarms to promote greatly the additional value of the system.

Additionally, the other object of the present invention is that the system for receiving and analyzing a traffic video is built on street light equipment and streetlight poles, in order to facilitate a construction of system to be more comprehensive and universal for receiving and analyzing a traffic video of the present invention to form a more complete traffic safety network. The additional costs will not be generated, or the additional space will not be required because of the popularity of street lighting equipment; therefore, the system for receiving and analyzing a traffic video of the present invention can be quickly built, so that the promotion of modernization construction facing with questions of fund and space utilization can be effectively solved.

### BRIEF DESCRIPTION OF THE DRAWINGS

The above and other objects, features and other advantages of the present invention will be more clearly understood from the following detailed description taken in conjunction with the accompanying drawings, in which:
FIG 1 is a system architecture diagram of a preferred embodiment according to the present invention; and
FIG 2 is a schematic diagram of the supervisory equipment of the present invention applied on the traffic signal at the intersection.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

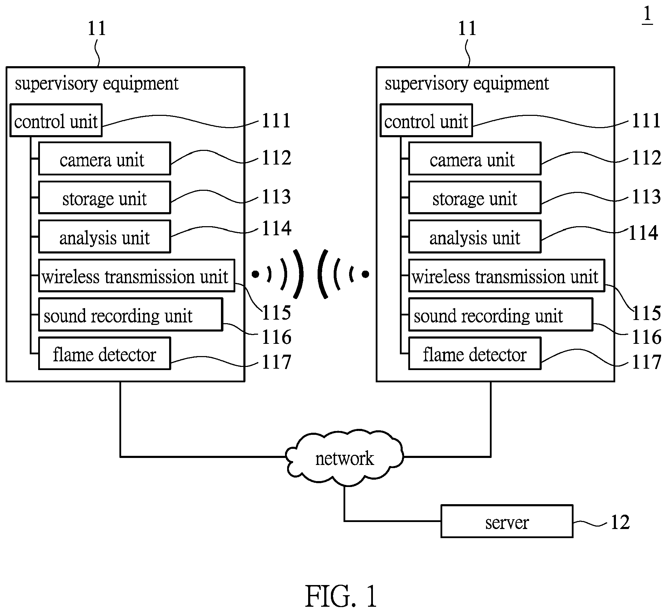

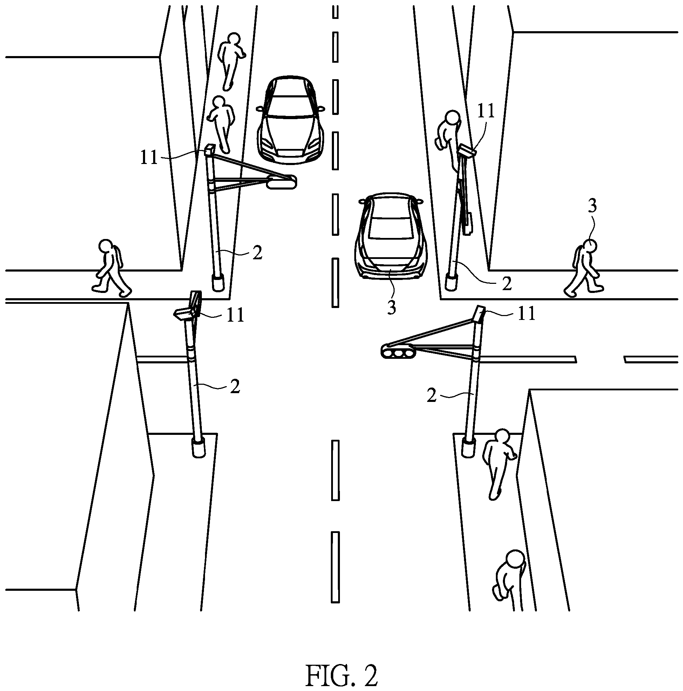

The invention provides a system for receiving and analyzing a traffic video, please refer to Figures 1 and 2, the system for receiving and analyzing the traffic video 1 of the present invention is made of a plurality of supervisory equipment 11, and each of the supervisory equipment 11 respectively comprises a control unit 111, such as a central process unit (CPU), a camera unit 112, a storage unit 113, such as a memory or a hard disk, and an analysis unit 114 and a sound recording unit 116. In an embodiment of the present invention, each of the supervisory equipment 11 may be disposed on a traffic signal 2, but the present invention is not limited thereto. In the other preferred embodiment, in order to facilitate a more comprehensive and general construction of the system for receiving and analyzing a traffic video of the present invention to form a more complete traffic safety network; therefore, each of the supervisory equipment 11 may be disposed on a street lamp device. The additional costs will not be generated or the additional space will not be required because of the popularity of street lighting equipment; therefore, the system for receiving and analyzing a traffic video of the present invention can be quickly built, so that the promotion of modernization construction facing with questions of fund and space utilization can be effectively solved.

As described above, in the preferred embodiment of the present invention, the camera unit 112 and the sound recording unit 116 are electrically connected to the control unit 111, so that functions of capturing images or sound recording are executed by the control unit 111. The storage unit 113 is electrically connected to the control unit 111, the camera unit 112 and the sound recording unit 116, so that a displaying image recorded by the function of capturing images is received and stored, and/or a sound signal recorded by the sound recording unit 116 is received and stored. The analysis unit 114 is electrically connected to the control unit 111 and the storage unit 113, so that the displaying images stored in the storage unit 113 are read, and/or the sound signal stored in the storage unit 113 are read.

Further, please refer to Figures 1 and 2, the displaying images may be analyzed by the analysis unit 114 according to at least one analysis condition set in advance. For example, in the preferred embodiment of the present invention, at least one analysis condition of the analysis conditions is a motion object recognition condition. A simulated computation is executed by the analysis unit 114 to obtain a simulated moving path relative to the motion object 3, when a motion object 3, such as pedestrians, vehicles, unmanned aircraft vehicle and so on, is recognized by the analysis unit 114 according to the motion object recognition condition. Therefore, the simulated computation is executed by the analysis unit 114, so that the possible motion paths can be calculated in advance in the process of motion of various vehicles and even pedestrians, and the simulated computation can be an assessment standard of traffic conditions in advance. For example, if a particular vehicle travels at an abnormal speed, and there are other objects on the predicted simulated path; therefore, it may be judged to be potentially hazard. Alternatively, if the motion object 3 is an unmanned aircraft vehicle, commonly known as a Drone, also called an unmanned aerial vehicle (UAV), a warning message may be issued in advance to inform the operator of the unmanned aircraft vehicle to change the route of the unmanned aircraft vehicle, when it is judged that the direction of its advancement is approaching the air traffic control area (for example, around the airport or important government location and so on). Hereinafter, it should be understood that the Examples are provided for the purpose of illustrations only and to better explain to a person having ordinary skill in the art, and is not intended to limit the scope of the present invention, so other equivalents and modifications could be made thereto without departing from the spirit and scope of the present invention.

The main characteristics of traffic accidents are included as follows. The volume of the recorded sound suddenly becomes larger, the recorded collision sound may be clearly identified, the traffic speed instantly slows down or falls to zero, two or more motion objects 3 overlap, remnants are found on the road during non-traffic jam time or non-stop lights (vehicles on the road after the collision), the traffic jam occurs after the accident, the traffic lanes are changed after the accident, the acceleration of the object is suddenly increased (the vehicle crashed or people hit by the vehicle) and so on. Furthermore, please refer to Figures 1 and 2, the aforementioned characteristics are obtained by the camera unit 112 and the sound recording unit 116, and analyzed by the analysis unit 114. In short, the present invention may be applied to simulate and operate the motion path, and may also be used for an accident analysis. More specifically, in other application examples of the present invention, the at least one analysis conditions is an accident characteristic recognition condition, such as the aforementioned collision sound, overlapping events or remnants. The correct rates of the traffic accidents occurrences are determined higher, when the number of identified characteristics is greater. An event recording signal is sent to the control unit 111 when an accident occurrence is judged by the accident characteristic recognition condition, so that the displaying image at a predetermined time range is stored as an event recording image by the control unit 111 according to the event recording signal, and the sound signal at a predetermined time range is stored as an event recording sound signal.

As described above, the monitoring system which records continuously does not store all the captured images and / or sound signals for long periods of time, but the captured images and / or sound signals, which is subsequently captured, overwrite or instead continuously to replace the original stored content. The displaying images and the sound singles are respectively stored as an event recording image and an event recording sound signal by the event recording signal within a predetermined time period (for example, at a time point from the judgment of the accident, 3 minutes forward, 7 minutes later, but not limited thereto), when the accident is suspected to occur. Therefore, the captured images and / or sound signals may not overwrite or instead through the subsequent captured singles, so that the sounds and images produced before and after the accident are stored as the event recording sound signals and the event recording images to clarify the responsibility after the accident.

Further, please refer to Figure 1, in the preferred embodiment of the present invention, each of the supervisory equipment 11 further includes a wireless transmission unit 115. The wireless transmission unit 115 is electrically connected to the control unit 111, and any supervisory equipment 11 of the system is capable of transmitting information to another supervisory equipment 11 of the system through the wireless transmission unit 115 by the control unit 111. In detail, each of the analysis unit 114 of each of supervisory equipment 11 may not only read the displaying images and the sound single stored in the storage unit 113, but also analyze the displaying images and the sound single captured at different angles and distances through sharing information to improve the accuracy and credibility of various analyses. In this regard, the aforementioned comprehensive analysis can be achieved through the technology of real time video stitching, which requires the use of 3D depth data, 3D Video, 2D Video, Lidar and other sensors. Specifically, in the preferred embodiment of the present invention, each of supervisory equipment 11 shares the obtained displaying images through the wireless transmission units 115, and the displaying images with the different angles and positions obtained by the camera unit 112 are executed a real time video stitching to build the displaying images with a full size (for example, a viewing angle of 180 degrees) or the displaying images with a specific angle by the real time video stitching technique. Many advantages may be achieved by the practical application of the technology. For example, since the stricter regulatory specifications for unmanned aircraft vehicle are executed in some cities, the regulatory specifications may require that an operator of an unmanned aircraft vehicle must maintain the unmanned aircraft vehicle in its line of sight. When the technology of the present invention is applied to the cities, the operator of the unmanned aircraft vehicle is able to obtain the processed displaying images through the wireless transmission units 115, and the flight conditions of the unmanned aircraft vehicle can be visually confirmed at any time.

As described above, the analysis unit 114 of the present invention may obtain a simulated moving path equivalent to the motion object 3 by performing a simulated operation. In the preferred embodiment of the present invention, since each of the supervisory equipment 11 may share information with each other through the wireless transmission unit 115; therefore, another displaying image of another supervisory equipment 11 may be received when the simulated operation is executed by the analysis unit 114. Further, the simulated operation is executed according to the displaying images of the supervisory equipment 11 and another displaying image of another supervisory equipment 11 to obtain the simulated moving path equivalent to the motion object 3. Therefore, the predicted resultant of the simulated moving path may be made more accurate by the displaying image, which is a comprehensive analysis (for example, the real time video splicing described above), obtained at different angles.

Furthermore, please refer to Figure 1, in the preferred embodiment of the present invention, the system further comprises a server 12, and the server 12 is connected to the supervisory equipment 11 through a network to receive singles from the supervisory equipment 11. Therefore, the event recording signal and the event recording image are sent to the server 12 to save the event recording signal and the event recording image by the server for a long time. Additionally, the storage space of the storage unit 113 is released to facilitate the subsequent application, after the event recording signal and the event recording image are stored in the server 12. Further, although each of the supervisory equipment 11 of the present invention can perform a basic analysis operation by itself, it is difficult to expect that each of the supervisory equipment 11 is equipped with a device capable of handling complicated operations based on cost considerations. Therefore, the event recording sound singles and the event recording images are transmitted to the server 12 in the present invention, further, the analysis operation has high complexity and the analysis operation may not be executed by each of the supervisory equipment 11 itself, which may be executed by the hardware and software resources built in the server 12. Accordingly, it is possible to achieve a good effect of division of labor, that is, each of the wireless transmission units 115 is used between each of the supervisory equipment 11 to share information with each other and executes basic operations to provide the most immediate and firsthand information. Additionally, if a more detailed analysis, an accurate analysis, and long-term preservation of information are executed, the relevant information is sent to the server 12. This is an effective way to avoid the shortcomings, for example, all analysis must be sent to the remote server to execute an analysis in the traditional method; it is waste of time to transfer information; and an immediate response is made in the traditional method. Further, the possibility of performing precise operations is kept, and the overall cost may take into account.

Additionally, please refer to Figure 1, in the preferred embodiment of the present invention, the system 1 further comprises a flame detector 117 in order to further improve the safety notification of the system 1. In general, the flame may emit spectra with different wavelengths according to the conditions of the combustion material and the temperature environment; therefore, the flame detector 117 is accordingly designed to various types, such as an infra-red (IR) based flame detectors, an ultra-violet (UV) based flame detectors or a combination thereof, even a dual band infrared flame detector, or a tri-band infrared flame detector and so on. As described above, the detectors can be used as the flame detector 117 of the present invention, it should be understood that the Examples are provided for the purpose of illustrations only and to better explain to a person having ordinary skill in the art, and is not intended to limit the scope of the present invention, so other equivalents and modifications could be made thereto without departing from the spirit and scope of "the flame detector 117" of the present invention.

As described above, the flame detector 117 is electrically connected to the control unit 111 to send an alarm signal to the control unit 111 when a fire occurrence is detected by the flame detector 117, so that a notification signal is sent to the server 12 by the control unit 111 through the network, such as a wireless transmission unit 115. In detail, if a traffic accident causes a fire accident (such as a vehicle fire burning), the system will perform a notification at this time. However, as described above, since each of the supervisory equipment 11 of the present invention may also be widely disposed on a street light equipment or the like, it can be used as a community fire prevention or notification mechanism in a region where the supervisory equipment 11 is be widely installed on a street light. Therefore, the system cannot only be used for forecast, notification and record of the general traffic events, but also further provides function of fire alarms to promote greatly the additional value of the system.

The foregoing description, for the purpose of explanation, has been described with reference to specific embodiments; however, the embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the disclosure to the precise forms disclosed. Modifications and variations are possible in view of the above teachings.

## Claims

1. A system for receiving and analyzing a traffic video, made of a plurality of supervisory equipment 11, wherein each of the supervisory equipment 11 respectively comprises:
a control unit 111;
a camera unit 112 electrically connected to the control unit 111 to execute a function of capturing images by the control unit 111;
a storage unit 113 electrically connected to the control unit and the camera unit 112 to receive and store a displaying image recorded through the function of capturing images from the camera unit 112; and
an analysis unit 114 electrically connected to the control unit 111 and the storage unit 113 to read the displaying images stored in the storage unit 113, and analyzing the displaying images based on at least one pre-setting analysis condition.

2. The system according to claim 1, wherein the at least one analysis condition is a motion object recognition condition.

3. The system according to claim 2, wherein a simulated computation is executed by the analysis unit 114 to obtain a simulated moving path equivalent to the motion object 3, when a motion object 3 is recognized by the analysis unit 114 according to the motion object recognition condition.

4. The system according to claim 2, wherein each of the supervisory equipment 11 further comprises a wireless transmission unit 115 electrically connected to the control unit 111, and any supervisory equipment 11 of the system is capable of transmitting information to another supervisory equipment 11 of the system through the wireless transmission unit 115.

5. The system according to claim 3, wherein each of the supervisory equipment 11 further comprises a wireless transmission electrically connected to the control unit 111, and any supervisory equipment 11 of the system is capable of transmitting information to another supervisory equipment 11 of the system through the wireless transmission unit 115.

6. The system according to claim 5, wherein the analysis unit 114 of each of the supervisory equipment 11 is capable of receiving another displaying image of another supervisory equipment 11, and a simulated computation is executed according to the displaying image of the supervisory equipment 11 and another displaying image of another supervisory equipment 11 to obtain the simulated moving path equivalent to the motion object 3.

7. The system according to claim 1, further comprises a sound recording unit 116 electrically connected to the control unit 111 and the storage unit 113 to execute a function of recording sound through the control unit 111, and a recorded sound signal is stored in the storage unit 113.

8. The system according to claim 4, further comprises a sound recording unit 116 electrically connected to the control unit 111 and the storage unit 113 to execute a function of recording sound through the control unit 111, and a recorded sound signal is stored in the storage unit 113.

9. The system according to claim 2, wherein at least one analysis condition of the analysis conditions is an accident characteristic recognition condition.

10. The system according to claim 7, wherein at least one analysis condition of the analysis conditions is an accident characteristic recognition condition.

11. The system according to claim 8, wherein at least one analysis condition of the analysis conditions is an accident characteristic recognition condition.

12. The system according to claim 9, wherein an event recording signal is sent to the control unit 111 when an accident occurrence is judged by the analysis unit 114 according to the accident characteristic recognition condition, so that the displaying images at a predetermined time range are stored as an event recording image by the control unit 111 according to the event recording signal.

13. The system according to claim 10, wherein an event recording signal is sent to the control unit 111 when an accident occurrence is judged by the analysis unit 114 according to the accident characteristic recognition condition, so that the displaying images at a predetermined time range are stored as an event recording image by the control unit 111 according to the event recording signal.

14. The system according to claim 11, wherein an event recording signal is sent to the control unit 111 when an accident occurrence is judged by the analysis unit 114 according to the accident characteristic recognition condition, so that the displaying images at a predetermined time range are stored as an event recording image by the control unit 111 according to the event recording signal.

15. The system according to claim 12, further comprises a server connected to the supervisory equipment 11 through a network to receive singles from the supervisory equipment 11.

16. The system according to claim 13, further comprises a server connected to the supervisory equipment 11 through a network to receive singles from the supervisory equipment 11.

17. The system according to claim 14, further comprises a server connected to the supervisory equipment 11 through a network to receive singles from the supervisory equipment 11.

18. The system according to claim 15, further comprises a flame detector 117 electrically connected to the control unit 111 to send an alarm signal to the control unit 111 when a fire occurrence is detected by the flame detector 117, so that a notification signal is sent to the server by the control unit 111 through the network.

19. The system according to claim 16, further comprises a flame detector 117 electrically connected to the control unit 111 to send an alarm signal to the control unit 111 when a fire occurrence is detected by the flame detector 117, so that a notification signal is sent to the server by the control unit 111 through the network.

20. The system according to claim 17, further comprises a flame detector 117 electrically connected to the control unit 111 to send an alarm signal to the control unit 111 when a fire occurrence is detected by the flame detector 117, so that a notification signal is sent to the server by the control unit 111 through the network.
